# EUROPÄISCHE PATENTSCHRIFT

(11) **EP 2 331 648 B1**
(45) Veröffentlichungstag und Bekanntmachung des Hinweises auf die Patenterteilung: **14.03.2012**
(21) Anmeldenummer: 09782530.1
(22) Anmeldetag: 03.09.2009
(51) Int. Cl.: C09J 123/08

(54) **SCHMELZKLEBSTOFF AUF BASIS VON METALLOCEN-KATALYSIERTEN ETHYLEN-ALPHA-OLEFIN COPOLYMEREN**
MELT ADHESIVE BASED ON METALLOCENE-CATALYZED ETHYLENE-ALPHA-OLEFIN COPOLYMERS
ADHÉSIF FUSIBLE À BASE DE COPOLYMÈRES ÉTHYLÊNE-ALPHA-OLÉFINE CATALYSÉS PAR UN MÉTALLOCÈNE

(30) Priorität: 05.09.2008 DE 102008045802
(43) Veröffentlichungstag der Anmeldung: 15.06.2011
(73) Patentinhaber: Henkel AG & Co. KGaA, 40589 Düsseldorf (DE)
(72) Erfinder: MÖLLER, Thomas, 40593 Düsseldorf (DE); ERB, Volker, 40595 Düsseldorf (DE); HEEMANN, Marcus, 41468 Neuss (DE); KASPER, Dirk, 40597 Düsseldorf (DE); PÜRKNER, Eckhard, 40595 Düsseldorf (DE); HERLFTERKAMP, Bernhard, 46236 Bottrop (DE)
(86) Internationale Anmeldenummer: PCT/EP2009/061366
(87) Internationale Veröffentlichungsnummer: WO 2010/026172

(56) Entgegenhaltungen:
- WO-A1-2006/114160
- WO-A2-2006/102150

## Beschreibung

Die Erfindung betrifft Schmelzklebstoffe hergestellt auf Basis von Metallocen-katalysierten C₂/C₃/α-Olefin Copolymeren mit einer Blockstruktur, die zusammen mit weiteren Zusatzstoffen Schmelzklebstoffe mit neuen mechanischen Eigenschaften ergeben. Weiterhin werden geeignete Schmelzklebstoffe für besondere Anwendungsgebiete beschrieben.

Schmelzklebstoffe, die zum Verkleben von verschiedensten Materialien geeignet sind, sind allgemein bekannt. In der EP 0912646 werden Schmelzklebstoffe beschrieben, die aus einem im wesentlichen linearen Copolymer aus Ethylen zusammen mit mindestens einem C₃ bis C₂₀-α-Olefinmonomeren hergestellt werden. Auch in der WO 00/00565 werden Schmelzklebstoffe, die auf Basis von linearen Ethylen-α-Olefin-Copolymeren hergestellt werden, beschrieben. Es werden dort die üblichen Zusatzkomponenten beschrieben, z.B. klebrigmachende Harze, Wachse, weitere unterschiedliche Polymere, Styrolblockcopolymere, Weichmacher oder andere Additive. Als Verwendungszweck wird das Verkleben von Papier und Pappmaterialien beschrieben sowie eine Verwendung als Klebeband oder zum Buchbinden. Blockcopolymere werden nicht beschrieben.

In der WO 2001/46277 werden ebenfalls Metallocen-katalysierte C₃-α-Olefin-Polymere beschrieben. Diese werden zusammen mit verschiedenen Zusatzstoffen, wie im vorherigen Absatz bereits angegeben, zu verschiednen Klebstoffen formuliert. Bei den Polymeren werden über die Anordnung der Monomere keine Angaben gemacht, es handelt sich um statistische Anordnungen.

In der WO 2006/102150 werden Klebstoffe auf Basis ausgewählter C₂-α-Olefin Copolymeren beschrieben. Diese Copolymere und ihre Herstellung werden beispielsweise auch in der WO 2005/090426 beschrieben. Dabei werden spezielle Katalysatoren bzw. Überträgerverbindungen erwähnt. Es werden neben anderen Produkten auch Klebstoffe beschrieben. Dabei ist aber festzustellen, dass die Zusammensetzung der Bestandteile der Klebstoffe, ihre Eigenschaften und ihre speziellen Anwendungen nur in Form von Listen, Aufzählungen und aufgabenhaft aufgeführt werden. Eine spezielle Offenbarung ist nicht gegeben. Es werden verschiedene allgemeine Eigenschaften beschrieben, insbesondere die Viskosität. Es wird erwähnt, dass es sich auch um Blockcopolymere handeln kann.

Aus den bekannten Olefincopolymeren können Schmelzklebstoffe hergestellt werden. Diese ergeben auch bei erhöhter Temperatur gute Verklebungen. Es hat sich jedoch gezeigt, dass für viele Nutzungsarten die Eigenschaften in niedrigen Temperaturbereichen angepasst werden müssen. Besonders wichtig ist ein weitgehend konstanter Eigenschaftsverlauf bei Temperaturen um die Raumtemperatur. Dadurch können unter industriellen Anwendungsbedingungen schnell und gleichmäßige Verklebungen erzielt werden.

Aufgabe der vorliegenden Erfindung ist es deswegen Schmelzklebstoffe zur Verfügung zu stellen, die besondere applikationstechnische Eigenschaften aufweisen. Die Schmelzklebstoffe sollen eine niedrige Viskosität zeigen, um eine gute Applikation zu ermöglichen, insbesondere sollen ihre mechanischen Eigenschaften in dem Temperaturbereich bis 50°C möglichst konstant bleiben. Beispielsweise soll das elastische Verhalten, dass die Kohäsion des Klebstoffs beeinflusst, möglichst linear oder konstant gehalten werden.

Die Aufgabe wird dadurch gelöst, dass ein Schmelzklebstoff zur Verfügung gestellt wird, enthaltend
a) 5 bis 40 Gew.-% mindestens eines Copolymeren auf Basis von Ethylen und mindestens einem C₃ bis C₂₀-α-Olefin, das durch Metallocen-katalysierte Polymerisation erhältlich ist,
b) 10 bis 65 Gew.-% mindestens eines klebrigmachenden Harzes,
c) 0 bis 35 Gew.-% eines Weichmachers
d) 0,01 bis 30 Gew.-% Additive und Zusatzstoffe ausgewählt aus Stabilisatoren, Haftvermittler, Füllstoffe oder Pigmente, Wachsen und/oder anderen Polymeren,
wobei die Summe 100 % betragen soll, dadurch gekennzeichnet, dass das Copolymer ein Blockcopolymer ist, das im Bereich von -10°C bis 50°C eine weitgehend lineares elastisches Verhalten zeigt gemessen als Verhältnis des Speichermoduls E' gemäß (E'oc-E'_{25c}) / E'_{25C} < 1,5.

Ein weiterer Gegenstand der Erfindung ist die Verwendung solcher Schmelzklebstoffe zum Verkleben von folienförmigen Substraten. Ein weiterer Gegenstand der Erfindung ist die Herstellung von Schmelzklebstoffen zur Verwendung als sprühbare Schmelzklebstoffe. Ein weiterer Gegenstand der Erfindung ist die Herstellung von Schmelzhaftklebstoffen, die zusätzlich nach der Applikation vernetzbare Bestandteile enthalten.

Ein notwendiger Bestandteil des Klebstoffs sind Olefin-Copolymere auf Basis von Ethylen und mindestens einem C₃ bis C₂₀-α-Olefin. Diese Polyolefine werden über Metallocen-Katalyse hergestellt. Eine Ausführungsform der Erfindung verwendet solche Co- oder Terpolymere auf Basis von Ethylen zusammen C₄ bis C₂₀ -α-Olefinen. Bei den Monomeren, die zusätzlich zu Ethylen oder Propylen eingesetzt werden können, handelt es sich um die bekannten mit Ethylen oder Propylen copolymerisierbaren olefinisch ungesättigten Monomere. Insbesondere handelt es sich um lineare oder verzweigte C₄ bis C₂₀ -α-Olefine, wie Buten, Hexen, Methylpenten, Octen; cyclisch ungesättigte Verbindungen wie Norbornen oder Norbornadien; symmetrisch oder unsymmetrisch substituierte Ethylen-Derivate, wobei als Substituenten C₁ bis C₁₂ -Alkylreste geeignet sind; sowie ggf. ungesättigte Carbonsäuren oder Carbonsäureanhydride. Es kann sich dabei um Homopolymere, Copolymere, Terpolymere handeln, die auch weitere Monomere enthalten können. Im folgenden sollen unter Copolymere auch solche Polymere aus mehr als 2 Monomeren verstanden werden. Dabei soll bevorzugt die Menge der α-Olefin- Comonomere unterhalb 20 % betragen.

Eine andere Ausführungsform enthält Copolymere auf Basis von Ethylen und Propylen. Gegebenenfalls ist es möglich, dass auch zusätzliche geringe Anteile an C₄ bis C₂₀ -α-Olefinen enthalten sind. Diese werden ebenso über Metallocen-Katalysatoren hergestellt. Dabei soll die Menge des Propylen über 60 Gew.-% betragen, insbesondere liegt der Anteil an Propylen über 70 Gew.-%. Es können gegebenenfalls noch geringe Anteile an anderen α-Olefinmonomeren enthalten sein, die Menge soll weniger als 5 % betragen, insbesondere sind jedoch Ethylen/Propylen-Blockcopolymere geeignet.

Das Molekulargewicht der Copolymere liegt üblicherweise unter 200000 g/mol, insbesondere unter 100000 g/mol. Die Untergrenze beträgt 2000 g/mol, bevorzugt 5000 g/mol ( Zahlenmittel, M_{N}, gemessen mit GPC). Diese (Co)polymere zeichnen sich dadurch aus, dass sie eine enge Molekulargewichtsverteilung aufweisen. Die Molekulargewichtsverteilung ausgedrückt als M_{W}/M_{N} soll beispielsweise 2,5 betragen, insbesondere unter 2,3. Solche Polymere sind in der Literatur bekannt und können von verschiedenen Herstellern kommerziell erhalten werden. Beispielsweise sind geeignete Polymere unter dem Handelsnamen Vistamaxx oder Infuse kommerziell erhältlich.

Es handelt sich bei den erfindungsgemäß geeigneten Copolymeren um Blockcopolymere. Dabei weisen die Blöcke eine unterschiedliche Zusammensetzung der Monomeren auf. In einer Ausführungsform weisen die erfindungsgemäß geeigneten Schmelzklebstoffe eine Glasübergangstemperatur auf, in einer anderen Ausführungsform sollen die Copolymere zwei Glasübergangstemperaturen aufweisen. Die erste Glasübergangstemperatur (T_{g}) (gemessen über DTA) soll im Bereich zwischen -100 bis 0°C liegen, insbesondere zwischen -80 bis -10°C. Die zweite Glastemperatur soll insbesondere unterhalb von -100°C liegen.

Eine weitere notwendige Eigenschaft, um für die erfindungsgemäßen Schmelzklebstoffe geeignet zu sein, ist das lineare elastische Verhalten der Copolymere. Dieses soll im Bereich von -10 bis zu 50°C weitgehend gleichmäßig verlaufen. Insbesondere soll dieses Verhalten zwischen 0 und 25°C gegeben sein. Das elastische Verhalten wird gemessen als Verhältnis des Speichermoduls E', als E'_{0°C}- E'_{25C} / E'_{25C} < 1,5. Insbesondere soll das Verhältnis des Speichermoduls kleiner 1,3 betragen, in einer bevorzugten Ausführungsform sollen die erfindungsgemäßen Copolymere oder ihre Mischungen ein Verhältnis des Speichermoduls < 1,0 aufweisen. Das elastische Verhalten der Copolymere soll, aufgetragen in logarithmischem Maßstab (Ig E' als Funktion von T), in einer besonderen Ausführungsform weitgehend linear und gleich bleibend sein. Insbesondere kann die Funktion annähernd eine Gerade mit einer Steigung (Absolutwert) kleiner 0,5 sein. Polymere, die einen ähnlichen Aufbau aufweisen aber einen anderen Verlauf des Speichermoduls, sind nicht zur Herstellung erfindungsgemäßer Klebstoffe geeignet.

Die für den erfindungsgemäßen Schmelzklebstoff geeigneten Copolymere können einzeln eingesetzt werden, es ist auch möglich, mehrere, insbesondere zwei Copolymere gemeinsam einzusetzen. Dabei ist eine Verträglichkeit der Copolymere gegeben. Beispielsweise können Mischungen aus Ethylen/Propylen-Copolymeren und Ethylen/C₄ bis C₁₂-α-Olefin-Copolymeren eingesetzt werden.

Weiterhin enthält ein erfindungsgemäßer Schmelzklebstoff mindestens ein Harz. Das Harz soll das Basispolymer klebrig machen. Es wird im Allgemeinen in einer Menge von 10 bis 65 Gew.-% eingesetzt, insbesondere 25 bis 60 Gew.-%.

Es können im Prinzip die bekannten Harze, wie beispielsweise aromatische, aliphatische oder cycloaliphatische Kohlenwasserstoff-Harze sowie modifizierte oder hydrierte Naturharze eingesetzt werden. Geeignete im Rahmen der Erfindung anwendbare Harze sind z.B. Terpen-Harze, wie Terpolymere oder Copolymere des Terpens, modifizierte Naturharze wie Harzsäuren aus Batsamharz, Tallharz oder Wurzelharz, ggf. auch Hydroabietylalkohol und seine Ester, Acrylsäure-Copolymerisate, wie Styrol-Acrylsäure-Copolymere oder Copolymerisate aus Ethylen, Acrylatestern und Maleinsäureanhydrid, oder Harze auf Basis funktioneller Kohlenwasserstoffharze. Als einsetzbares klebrigmachendes Harz sind auch niedermolekulare Umsetzungsprodukte geeignet, die aus den oben erwähnten Ethylen/Propylen-α-Olefin- Polymeren bestehen. Das Molekulargewicht solcher Polymere beträgt meist unterhalb von 2000 g/mol.

Es handelt sich dabei insbesondere um Harze, die einen Erweichungspunkt von 80 bis 130°C (ASTM-Methode E28-58T) besitzen. Besonders bevorzugte Harze sind Kohlenwasserstoffharze. Eine andere besondere Ausführungsform setzt Harze ein, die einen Erweichungspunkt unterhalb von 50°C aufweisen, insbesondere können diese auch flüssig sein.

Ein weiterer erfindungsgemäß wichtiger Bestandteil sind Weichmacher. Es kann sich dabei beispielsweise um medizinische Weißöle, naphtenische Mineralöle, Polypropylen-, Polybuten-, Polyisopren-Oligomere, hydrierte Polyisopren-und/oder Polybutadien-Oligomere, Benzoatester, Phthalate, Adipate, pflanzliche oder tierische Öle und deren Derivate. Hydrierte Weichmacher werden beispielsweise ausgewählt aus der Gruppe der paraffinischen Kohlenwasserstofföle. Auch Polypropylenglykol und Polybutylenglykol, sowie Polymethylenglykol sind geeignet. Es werden auch Ester als Weichmacher eingesetzt, z. B. flüssige Polyester und Glycerinester. Dabei soll das Molekulargewicht von Polyalkylenglykolen oder Polybutenoligomeren von 200 bis 6 000 g/mol betragen, Polyolefine sollen ein Molekulargewicht bis etwa 2000 g/mol aufweisen, insbesondere bis 1000g /mol. Insbesondere sind Weißöle, mineralischen Öle, Polybutene und flüssige oder pastöse hydrierte Kohlenwasserstoffe geeignet.

Die Menge der Weichmacher soll zwischen 0 bis 35 Gew.-% betragen. Dabei führt ein hoher Anteil von Weichmachem zu geringem kohäsiven Eigenschaften des Klebstoffs. Insbesondere soll der Anteil der Weichmacher zwischen 3 bis 30 % betragen, in einer besonderen Ausführungsform zwischen 5 bis 15 Gew.-%.

Gegebenenfalls können dem Schmelzklebstoff Wachse in Mengen von 0 bis 30 Gew.-% zugegeben werden, bevorzugt von 0,5 bis etwa 5 Gew.-%. Die Menge ist dabei so bemessen, dass einerseits die Viskosität auf den gewünschten Bereich abgesenkt wird, andererseits aber die Adhäsion nicht negativ beeinflusst wird. Das Wachs kann natürlichen, ggf. auch in chemisch modifizierter Form, oder synthetischen Ursprungs sein. Als natürliche Wachse können pflanzliche Wachse, tierische Wachse eingesetzt werden oder Mineralwachse oder petrochemische Wachse. Als chemisch modifizierte Wachse können Hartwachse wie Montanesterwachse, Sasolwachse usw. eingesetzt werden. Als synthetische Wachse finden Polyalkylenwachse sowie Polyethylenglykolwachse Verwendung. Vorzugsweise werden petrochemische Wachse wie Petrolatum, Paraffinwachse, mikrokristalline Wachse sowie synthetische Wachse eingesetzt.

Die erfindungsgemäßen Schmelzklebstoffe können neben den oben genannten Bestandteilen noch weitere, üblicherweise in Schmelzklebstoffen eingesetzte Bestandteile als Additive enthalten. Hierzu zählen beispielsweise Stabilisatoren, Haftvermittler, Antioxidantien, Füllstoffe und/oder Pigmente. Damit können bestimmte Eigenschaften des Klebstoffs, wie z. B. Kohäsion, Stabilität, Haftung oder Festigkeit beeinflusst werden. Die Menge der Additive und Zusatzstoffe soll 0,01 bis 30 Gew.-% betragen, insbesondere von 0,1 bis 15 Gew.-%.

Additive, wie Stabilisatoren oder Haftvermittler sind dem Fachmann bekannt. Es sind kommerzielle Produkte und der Fachmann kann sie entsprechend den gewünschten Eigenschaften auswählen. Dabei ist darauf zu achten, dass eine Verträglichkeit mit der Polymermischung gegeben ist.

Als optionalen Bestandteil kann der erfindungsgemäße Schmelzklebstoff 0 bis 15 Gew.-% von weiteren gegenüber den erfindungsgemäßen Copolymeren unterschiedlichen Polymeren enthalten. Insbesondere soll die Menge dieser Polymere weniger als die erfindungsgemäß notwendigen Mengen der erfindungsgemäßen Blockcopolymeren betragen. Diese Polymere können verschiedene anwendungstechnische Eigenschaften des Schmelzklebstoffs verbessern, z. B. Wärmestandfestigkeit, Kälteflexibilität, Kohäsion und Haftung des aufgetragenen Klebstoffs. Diese weiteren Polymere sollen keine unter den Herstell- und Lagerbedingungen vernetzenden Gruppen aufweisen.

Es kann sich dabei insbesondere um kautschukartige Block-Copolymere handeln, die Styrol enthalten und linear oder radial aufgebaut sind, wie SIS, SBS, SIBS oder vorzugsweise SEBS und SEPS. Weitere Beispiele sind festes Polybuten oder seine Copolymere, Polymethylvinylether, Polymere sowie Polyphenylenoxid und Modifikationen davon. Dabei sollen diese zusätzlichen Polymere bei Raumtemperatur fest sein und sich homogen mit dem Schmelzklebstoff mischen lassen. Eine Mikrophasenstruktur ist dabei nicht ausgeschlossen.

In einer anderen Ausführungsform kann der Schmelzklebstoff zusätzlich mindestens ein elastisches Polymer auf Basis von Olefinen und (Meth)acrylsäureestem enthalten, das Carboxylgruppen und/oder Anhydridgruppen aufweist. Die Olefinmonomere können aus den bekannten C₂ bis C₅-Olefinen ausgewählt werden, insbesondere Ethylen oder Propylen. Die (Meth)acrylsäureester werden aus (Meth)Acrylestern mit niedermolekularen C₁ bis C₈-Alkanolen ausgewählt, insbesondere sind Methyl(meth)acrylat, Ethyl(meth)acrylat, Propyl(meth)acrylat, Butyl(meth)acrylat oder 2-Ethylhexyl(meth)acrylat einzeln oder im Gemisch geeignet. Das Copolymere muss noch Carboxylgruppen und/oder Anhydridgruppen aufweisen. Das kann durch Polymerisation mit entsprechenden funktionellen Monomeren geschehen oder durch nachträgliche Modifikation der Polyolefincopolymere. Beispielsweise ist es möglich, durch Oxidation COOH-Gruppen einzuführen. Weiterhin ist es möglich, durch radikalische Pfropfungsreaktionen, beispielsweise mit Maleinsäureanhydrid, COOH- oder Anhydrid-Gruppen in das Polymere einzuführen.

Dieses Polymer weist üblicherweise ein Molekulargewicht (Mn) zwischen 3000 und 50000 g/mol aufweisen, insbesondere 8000 bis 25000 g/mol. Die Menge der COOH-/ Anhydrid-Gruppen soll zwischen 1 bis 100 mg KOH/g betragen, insbesondere zwischen 5 bis 50 mg KOH/g. Ist die Anzahl der Carboxylgruppen hoch, so ist die Verträglichkeit der Bestandteile des Schmelzklebstoffs problematisch. Dabei soll der Erweichungspunkt von 50°C bis 150°C liegen, insbesondere von 90 bis 110°C. Die Menge des COOH-Gruppen tragenden Polymerisats soll zwischen 0 bis 15 Gew.-% betragen, insbesondere zwischen 0,5 bis 10 Gew.-%. Geeignete Carboxylgruppen aufweisende Polymerisate sind kommerziell erhältlich und dem Fachmann bekannt.

Ein weiteres Beispiel für elastische Polymere sind Ethylen/Propylen-Copolymere. Es handelt sich dabei um bekannte statistische Copolymere. Insbesondere können das ebenfalls elastische Polymere sein.

Während die elastischen Polymere die Flexibilität des Schmelzklebstoffs beeinflussen, kann die Kohäsion durch Anteile an zusätzlichen, nicht flexiblen thermoplastischen Polymeren verbessert werden. Insbesondere sind die bekannten thermoplastischen Polymere, wie EVA, hochmolekulare Polyolefine, wie Poly-1-Buten, geeignet.

Beispielsweise können auch Füllstoffe in Konzentrationen von 0 bis 10 Gew.-% eingesetzt werden, um die anwendungstechnischen und klebetechnischen Eigenschaften verbessern. Das können beispielsweise Farbstoffe oder Füllstoffe wie Titandioxid, Zinkoxid, Gips, Schwerspat, Ton, Kreide und dergleichen sein.

Der erfindungsgemäße Schmelzklebstoff wird durch bekannte Verfahren durch Mischen in der Schmelze hergestellt. Dabei können alle Komponenten gleichzeitig vorgelegt, erwärmt und dann homogenisiert werden, oder es werden zuerst die leichter schmelzenden Komponenten vorgelegt und gemischt, danach die weiteren Harzbestandteile zugegeben. Es ist auch möglich, den Schmelzklebstoff kontinuierlich in einem Extruder herzustellen. Der geeignete Schmelzklebstoff ist fest und, bis auf Verunreinigungen, frei von Lösemitteln.

Der erfindungsgemäß geeignete Schmelzklebstoff soll eine Viskosität von 500 bis 30000 mPas aufweisen, bevorzugt von 500 bis 10000, insbesondere von 1000 bis 6000 mPas gemessen bei Applikationstemperatur. Diese liegt zwischen 140 bis 190°C (Brookfield, EN ISO 2555, gemessen bei angegebener Temperatur).

Der erfindungsgemäße Schmelzklebstoff kann gut auf verschiedene Anwendungsformen abgestimmt werden. In einer besonderen Ausführungsform wird der Schmelzklebstoff zur Sprühapplikation eingesetzt. Es werden dabei als Weichmacher insbesondere Mineralöle auf paraffinischer oder naphtenischer Basis, Polybutene oder hydrierte Kohlenwasserstoffe eingesetzt. Diese Weichmacher sollen eine Viskosität zwischen 25 bis 300 mPas aufweisen, insbesondere zwischen 100 bis 250 mPas, gemessen bei 20°C. In dieser Ausführungsform weist der erfindungsgemäße Schmelzklebstoff eine Viskosität von 500 bis 6000 mPas auf, insbesondere zwischen 700 bis 2000 mPas gemessen bei Temperaturen zwischen 120 bis 160°C.

Weiterhin zeichnet sich ein entsprechend geeigneter sprühbarer Schmelzklebstoff durch eine von der Schergeschwindigkeit nur gering beeinflusste Viskosität auf. Insbesondere zeigen die geeigneten Schmelzklebstoffe dieser Ausführungsform ein weitgehend newtonisches Fließverhalten bei einer Temperatur von 140°C (nach DIN 53018-1). Dabei soll die Viskosität in Abhängigkeit einer Scherrate zwischen 0 und 250 s⁻¹ nur in geringen Werten, insbesondere weniger als +/- 15 % variieren.

Eine andere Ausführungsform eines erfindungsgemäßen Schmelzklebstoffs ist insbesondere zur Verklebung von gummielastischen Verbundfolien geeignet.
Als Trägerschicht für einen erfindungsgemäß hergestellten Verbund dienen elastomere Trägerfolien, die beispielsweise auf Basis von Styrol-BlockCopolymeren, Polyurethan, Polyestern, Polyetherblockcopolymeren oder Polyolefinen hergestellt werden können. Insbesondere sind Folien aus Styrol-Block-Copolymeren bekannt, beispielsweise Styrol-Isopren-Styrol, StyrolButadien-Styrol, Styrol-Ethlyen-Blockcopolymere, Polyethylen und Copolymere, Polypropylen und Copolymere sowie Polyethylen C₃ bis C₁₂-α-Olefin-Copolymere.

Dabei können die Folien hauptsächlich aus einzelnen dieser Polymere bestehen, es ist jedoch auch möglich, Gemische von anderen oben erwähnten Polymeren einzusetzen.

Die Trägerfolien zeigen sich durch eine gummielastische Dehnung aus, d.h. nach einer Elongation in eine Richtung ziehen sich die entsprechenden Folien bei Ende der Belastung wieder zusammen. Dabei soll die Dehnung mindestens 100 % betragen, insbesondere 200 % der ursprünglichen Länge. Dabei soll nach der Rückstellung maximal eine Verformung von 50 % der Ursprungslänge bleiben, bevorzugt weniger als 20 %, insbesondere weniger als 10 %. Die Folien können eine Dicke von 5 bis 75 µm aufweisen, insbesondere 10 bis 50 µm.

Als zweites Beschichtungsmaterial, das auf eine oder beide Seiten der Folie geklebt werden soll, kann es sich um dünne Vliesstofflagen handeln. Solche Vliesstoffe sind flächige Gebilde, die flexibel sind. Sie werden durch Verschlingung von Textilfasern hergestellt, beispielsweise im Spunbond oder durch Verwirbeln (Spunlaced) hergestellt. Solche Vliese weisen eine hohe Flexiblität auf, weiterhin sind sie für Gase und Flüssigkeiten durchlässig. Die zu den Vliesen verarbeiteten Fasern oder Filamente bestehen im Allgemeinen aus Polypropylen, Polyethylen, Polyester oder Viskose. Solche Vliese zeichnen sich durch eine hohe Flexibilität aus, sie können im allgemeinen auch gedehnt werden. Solche Vliese sind dem Fachmann bekannt und können je nach Anwendungseigenschaften, beispielsweise der Schichtdicke, ausgewählt werden.

Weiterhin ist es möglich, dass bei der erfindungsgemäß durchgeführten Verklebung als weitere Schichten auch flexible Folien mit der Trägerfolie verklebt werden können. Bei solchen Folien handelt es sich um flexible Folien, die aber an ihrer Oberfläche keine Klebrigkeit mehr aufweisen sollen. Diese können aus den bekannten, oben bereits angegebenen Polymeren bestehen. Gegebenenfalls ist es auch möglich, die Basisfolie auf der einen Seite mit einem Vlies, auf der anderen Seite mit einer Folie zu verkleben. Gegebenenfalls können auch weitere Schichten zu Mehrschicht-Verbundmaterialien verbunden werden.

Die Schichtdicke des aufgetragenen Klebstoffs beträgt beispielsweise von 2 bis 30 g/m² (ca. 2 bis 30 µm), Insbesondere soll die Schichtdicke weniger als 10 g/m² betragen.

Ein erfindungsgemäß geeigneter Klebstoff soll insbesondere flüssige oder pastöse Weichmacher mit guter Verträglichkeit enthalten. Dies sind beispielsweise medizinische Weißöle, naphtenische Mineralöle, Polypropylen-, Polybuten-, Polyisopren-Oligomere, hydrierte Polyisopren- und/oder Polybutadien-Oligomere, paraffinische Kohlenwasserstofföle. Dabei soll das Molekulargewicht von Polyalkylenglykolen oder Polybutenoligomeren von 200 bis 6 000 g/mol betragen, Polyolefine sollen ein Molekulargewicht bis etwa 2000 g/mol aufweisen, insbesondere bis 1000g /mol. Auch Polypropylenglykol und Polybutylenglykol, sowie Polymethylenglykol sind geeignet.

Weiterhin sind in dieser Ausführungsform insbesondere Copolymere auf Basis von Ehylen/Propylen geeignet. Zusätzlich können in dieser Ausführungsform zusätzlich 5 bis 30 Gew.-% elastische Homo- oder Copolymere enthalten sind, ausgewählt aus Styrolblockcopolymeren oder Ethylen-Acrylester-MSA-Copolymeren.

Zur erfindungsgemäßen Verklebung wird die Basisfolie im Allgemeinen durch Extrusion hergestellt. Auf diese Folie wird einseitig oder beidseitig der erfindungsgemäß geeignete Schmelzklebstoff aufgetragen. Das kann durch Coextrusion geschehen, durch bekannte Schlitzdüsen oder Roller, oder durch Sprühapplikation. Unmittelbar danach wird einseitig oder auf beiden Seiten die zu verklebende weitere Schicht, beispielsweise eine Vliesstoffschicht, aufgebracht. Durch Ausüben von mechanischem Druck können die drei Schichtmaterialien aneinandergepresst werden. Dabei entsteht ein reißfester stabiler Verbund, der danach aufgerollt, gelagert, weiterverarbeitet werden kann.

Das Applikationsverfahren ist abhängig von der Art des zu verklebenden Substrats und den geeigneten Maschinen dafür. Es kann sich um punktförmigen Auftrag, flächenförmigen Auftrag oder streifenförmigen Auftrag handeln. Das Auftragen kann durch Applikation über Sprühdüsen, durch Extrusionsbeschichtung oder durch Walzenauftragssysteme geschehen. Es kann auch durch Coextrusion mit zu kaschierenden Folien durchgeführt werden.

Die erfindungsgemäßen Schmelzklebstoffe werden zum Verkleben von Substraten, wie beschichtetes Papier oder Pappen, Folien, Kunststoffe oder metallisierte, fettabweisende oder lackierte Oberflächen, verwendet. Sie sind insbesondere zum Verkleben von Kunststoffoberflächen aus Polyethylen, Polypropylen als flexible Folie, als beschichtetes Papier oder Karton, als festes Substrat , z.B. Flaschen oder Becher, oder für Aluminium beschichtete Oberflächen geeignet. Der erfindungsgemäße Schmelzklebstoff kann zum Verkleben von Mehrschichtfolien, Behältern, wie Faltschachteln, Umkartons, trays oder zum Verkleben auf geformten Substraten verwendet werden. Weiterhin können mit dem erfindungsgemäßen Schmelzklebstoff Kunststoffteile an Verpackungen befestigt werden. Beispielsweise können Verschlüsse, Ausgießer oder andere Formteile an eine Verpackung geklebt werden. Die Verklebung dient zur Befestigung, kann aber auch eine Klebenaht abdichten.

Eine weitere Verwendungsform der erfindungsgemäßen Schmelzklebstoffe ist die Beschichtung von selbstklebenden Folien, Bändern oder Etiketten mit einer Klebstoffschicht. Dabei werden Bänder oder Folien, beispielsweise auf Basis von Polyolefinen oder Polyestem, mit dem erfindungsgemäß geeigneten Schmelzklebstoff beschichtet. Es wird in diesem Fall durch Auswahl eines entsprechenden Klebstoffs eine dauerhaft haftklebrige Schicht erhalten. Danach können diese Materialien konfektioniert werden. Auf diese Weise können dann dauerklebrige Folien, Etiketten und Bänder hergestellt werden. Die so erhaltenen selbstklebenden Oberflächen können ggf. durch antiadhäsiv beschichtete Trägerfolien abgedeckt werden.

Die entsprechenden verklebten Produkte können in vielen Anwendungsgebieten eingesetzt werden, beispielsweise als Klebebänder oder Etiketten, Mehrschichtfolien oder Verschlusssicherungen, Verpackungen, Hygieneprodukte oder in medizinischen Anwendungen.

Die nachfolgenden Beispiele erläutern die Erfindung:

Der Speichermodul E' wird folgendermaßen gemessen:

| | | |
|---|---|---|
| Probekörper: | 5 x 10 x 2 mm | |
| Messgerät: | DMA 242 C, Fa. Netzsch | |
| Heizrate: | 2 K/min | Dynamisch Kraft: 7 N |
| Frequenz: | 1 Hz | Amplitude: 50 µm |
| Es wird die Differenz des Speichermoduls bei 0 °C und bei 25 °C gebildet und | | |
| durch den Messwert bei 25 °C dividiert : E'_{0C}- E'_{25C}) / E'_{25C} | | |

Affinity GA 1950: C2/C8-Copolymer, (E'_{0C}- E'_{25C}) / E'_{25C} = 1,8 (Dow) Infuse D 9808.15: C2/C8-Copolymer, (E'_{0C}- E'_{25C}) / E'_{25C} = 0,7 (Dow) Vistamaxx VM 1120: C2/C3-Copolymer, (E'_{0C}- E'_{25C}) / E'_{25C} = 0,8 (Exxon)

### Beispiel 1:

| | |
|---|---|
| Affinity GA 1950 | 10,5 % |
| Infuse D 9808.15 | 10 % |
| Regalite S 1100 (Fa. Eastman), Harz | 55 % |
| Nyflex 222 B (Fa. Nynas), Weichmacher | 24 % |
| Irganox 1010 (Fa. Ciba), Stabilisator | 0,5 % |

Dieser Klebstoff ist besonders zum Verkleben von elastischen Laminaten geeignet. Dabei wird auf eine Folie aus Styrolblockcopolymeren der Klebstoff aufgesprüht mit einer Schichtdicke von 10 µm. Unmittelbar danach wird ein Vlies aufgebracht. Analog wird die Rückseite verklebt und der Verbund kurz gepresst. Der Verbund ist nach dem Abkühlen elastisch verbunden und stellt sich nach Dehnung wieder zurück. Dabei wird keine Delaminination beobachtet.

### Beispiel 2:

| | |
|---|---|
| Vistamaxx VM 1120 | 25 % |
| Regalite S 1100 (Fa. Eastman), Harz | 53 % |
| Priomol 352 (Exxon), Weichmacher | 20 % |
| Licocene PP 6102, Wachs | 1 % |
| Irganox 1010 (Fa. Ciba), Stabilisator | 0,5 % |

Die Bestandteile werden bei 160°C so lange gemischt, bis eine homogene Formulierung entsteht.

Auf eine Folie aus OPP (orientiertes Polypropylen) 25 µm, wird bei 140°C ein Klebstoff nach Beispiel 2 aufgesprüht. Das Sprühbild ist sauber und ohne Fadenzug.

### Beispiel 3:

| | |
|---|---|
| Affinity GA 1950 | 6,5 % |
| Infuse D 9808.15 | 19 % |
| Regalite S 1100 (Fa. Eastman) | 53 % |
| Nyflex 222 B (Fa. Nynas), | 21 % |
| Irganox 1010 (Fa. Ciba), | 0,5 % |

### Beispiel 4:

| | |
|---|---|
| Affinity GA 1950 | 8 % |
| Vistamaxx VM 1120 | 12 % |
| Regalite S 1100 (Fa. Eastman), | 53 % |
| Nyflex 222 B (Fa. Nynas) | 26,5 % |
| Irganox 1010 (Fa. Ciba) | 0,5 % |

Die Bestandteile werden bei 160°C so lange gemischt, bis eine homogene Formulierung entsteht.

Auf ein Folienetikett aus PE-Folie wird bei 140°C ein Klebstoff nach Beispiel 4 aufgerakelt. Die Menge beträgt 15 g/ m². Die haftklebrige Schicht wird mit einem antiadhäsiv beschichteten Papier abgedeckt. Nach entfernen der Schutzschicht kann das Etikett auf einer PET-Flasche verklebt werden..

### Beispiel 5:

| | |
|---|---|
| Exact 8230 (Exxon) | 45 % |
| Vistamaxx VM 2330 | 6 % |
| Kraton GX 1726 | 2% |
| Regalite S 1100 (Fa. Eastman), | 40 % |
| Vistanex PAR 950 (Exxon) | 5,5 % |
| Licocene PP 6102 | 2 % |
| Irganox 1010 (Fa. Ciba) | 0,5 % |

Die Bestandteile werden bei 160°C so lange gemischt, bis eine homogene Formulierung entsteht.

Der Klebstoff kann in der Schmelze auf ein Kunststoffsubstrat aus PE (Polyethylen) aufgetragen werden und danach unmittelbar auf eine Kartonverpackung geklebt werden.

## Patentansprüche

1. Schmelzklebstoff enthaltend
a) 5 bis 40 Gew.-% mindestens eines Copolymeren auf Basis von Ethylen und mindestens einem C₃ bis C₂₀-α-Olefin, das durch Metallocen-katalysierte Polymerisation erhältlich ist,
b) 10 bis 65 Gew.-% mindestens eines klebrigmachenden Harzes,
c) 0 bis 35 Gew.-% eines Weichmachers
d) 0,01 bis 30 Gew.-% Additive und Zusatzstoffe ausgewählt aus Stabilisatoren, Haftvermittler, Füllstoffe oder Pigmente, Wachsen und/oder anderen Polymeren,
wobei die Summe 100 % betragen soll, **dadurch gekennzeichnet, dass** das Copolymer ein Blockcopolymer ist, das im Bereich von 0°C bis 25°C ein weitgehend lineares elastisches Verhalten zeigt gemessen als Verhältnis des Speichermoduls E' gemäß (E'_{0C}- E'_{25C}) / E'_{25C} <1,5.

2. Schmelzklebstoff nach Anspruch 1, **dadurch gekennzeichnet, dass** das Copolymer eine Glasübergangstemperatur (Tg) unter 0 °C aufweist und einen Schmelzpunkt oberhalb von 30 °C.

3. Schmelzklebstoff nach Anspruch 1 oder 2, **dadurch gekennzeichnet, dass** das Copolymer ausgewählt wird aus Polymeren auf Basis von Ethylen mit C₄ bis C₁₂-α-Olefinen oder aus Polymeren auf Basis von Ethylen und Propylen oder Gemischen solcher Polymere.

4. Schmelzklebstoff nach einem der Ansprüche 1 bis 3, **dadurch gekennzeichnet, dass** ein Polymer oder beide Polymere ein Verhältnis des Elastizitätsmoduls von (E'_{0C}-E'_{25C}) / E'_{25C} < 1,0 aufweisen, insbesondere ein annähernd gleichbleibendes Verhalten zeigen.

5. Schmelzklebstoff nach einem der Ansprüche 1 bis 4, **dadurch gekennzeichnet, dass** das Polymer eine Polydispersität (M_{W}/M_{N}) von weniger als 2,5 aufweist.

6. Schmelzklebstoff nach einem der Ansprüche 1 bis 5, **dadurch gekennzeichnet, dass** das Copolymer zwei Glasübergangstemperaturen (Tg) aufweist, wobei eine Tg unter -100 °C und eine Tg zwischen -100 und 0°C liegt.

7. Schmelzklebstoff nach einem der Ansprüche 1 bis 6, **dadurch gekennzeichnet, dass** ein Gemisch aus 5 bis 30 Gew.-% eines Copolymeren Ethylen/Propylen und 5 bis 40 Gew.-% eines Copolymeren Ethylen/ C₄ bis C₁₂-α-Olefinen enthalten sind.

8. Schmelzklebstoff nach einem der Ansprüche 1 bis 7, **dadurch gekennzeichnet, dass** 5 bis 30 Gew.-% Weichmacher enthalten sind, ausgewählt wird aus Mineralölen, Polybuten, flüssigen oder pastösen hydrierten Kohlenwasserstoffen oder niedermolekularen Polyolefinen.

9. Schmelzklebstoff nach Anspruch 8, **dadurch gekennzeichnet, dass** als Zusatzstoff 0,5 bis 20 Gew.-% elastische Copolymere enthalten sind, ausgewählt aus Styrolblockcopolymeren, statistischen C2/C3-Copolymeren oder Ethylen-Acrylester-MSA-Copolymeren.

10. Schmelzklebstoff nach einem der Ansprüche 1 bis 9, **dadurch gekennzeichnet, dass** der Schmelzklebstoff eine Viskosität zwischen 500 und 20000 mPas aufweist, insbesondere von 500 bis 5000 mPas.

11. Schmelzklebstoff nach einem der Ansprüche 1 bis 10, **dadurch gekennzeichnet, dass** die Viskosität des Schmelzklebstoffs bei 140°C ein fast newtonisches Fließverhalten aufweist.

12. Verwendung eines Schmelzklebstoffs nach einem der Ansprüche 1 bis 11 zum Verkleben von gummi-elastischen Substraten, insbesondere zum Verkleben von Folien mit einer elastischen Dehnung über 100 %.

13. Verwendung eines Schmelzklebstoff nach einem der Ansprüche 1 bis 11 als Haftklebstoff, insbesondere zum Verkleben von Etiketten.

14. Verwendung eines Schmelzklebstoff nach einem der Ansprüche 1 bis 11 als sprühbarer Klebstoff.

## Claims

1. A melt adhesive containing
a) 5 to 40% by weight of at least one copolymer based on ethylene and on at least one C₃-C₂₀ α-olefin, which may be obtained by metallocene-catalyzed polymerization,
b) 10 to 65% by weight of at least one tacky resin,
c) 0 to 35% by weight of a plasticizer,
d) 0.01 to 30% by weight of additives and adjuvants selected from stabilizers, adhesion promoters, fillers or pigments, waxes and/or other polymers,
wherein the sum should amount to 100%, **characterized in that** the copolymer is a block copolymer, which exhibits in the range from 0°C to 25°C, a widely linear elastic behavior measured as a ratio of the storage modulus E' according to (E'_{0C}- E'_{25C})/E'_{25C} < 1.5.

2. The melt adhesive according to claim 1, **characterized in that** the copolymer has a glass transition temperature (Tg) below 0°C, and a melting point above 30°C.

3. The melt adhesive according to claim 1 or 2, **characterized in that** the copolymer is selected from polymers based on ethylene with C₄-C₁₂ α-olefins or from polymers based on ethylene and propylene or mixtures of such polymers.

4. The melt adhesive according to one of claims 1 to 3, **characterized in that** one polymer or both polymers have a ratio of the elastic modulus of (E'_{0C} - E'_{25C})/E'_{25C} <1.0, in particular exhibit an approximately constant behavior.

5. The melt adhesive according to one of claims 1 to 4, **characterized in that** the polymer has a polydispersity (M_{W}/M_{N}) of less than 2.5.

6. The melt adhesive according to one of claims 1 to 5, **characterized in that** the copolymer has two glass transition temperatures (Tg), one Tg lying below -100°C and one Tg lying between -100 and 0°C.

7. The melt adhesive according to one of claims 1 to 6, **characterized in that** a mixture of 5 to 30% by weight of an ethylene/propylene copolymer and of 5 to 40% by weight of an ethylen/C₄-C₁₂ α-olefins is contained.

8. The melt adhesive according to one of claims 1 to 7, **characterized in that** 5 to 30% by weight of plasticizer are contained, selected from mineral oils, polybutene, liquid or highly viscous, hydrogenated hydrocarbons or low molecular polyolefins.

9. The melt adhesive according to claim 8, **characterized in that** 0.5 to 20% by weight of elastic copolymers are contained as an additive, selected from styrene block copolymers, random C₂/C₃ copolymers or ethylene-acryl ester-MSA copolymers.

10. The melt adhesive according to one of claims 1 to 9, **characterized in that** the melt adhesive has a viscosity between 500 and 20,000 mPa.s, in particular from 500 and 5,000 mPa.s.

11. The melt adhesive according to one of claims 1 to 10, **characterized in that** the viscosity of the melt adhesive at 140°C has a quasi-Newtonian flow behavior.

12. The use of a melt adhesive according to one of claims 1 to 11 for adhesively bonding rubber-elastic ⁻substrates, in particular for adhesively bonding films with an elastic elongation of more than 100%.

13. The use of a melt adhesive according to one of claims 1 to 11, as a pressure-sensitive adhesive, in particular for adhesively bonding labels.

14. The use of a melt adhesive according to one of claims 1 to 11, as a sprayable adhesive.

## Revendications

1. Adhésif en masse fondue, contenant
a) 5 à 40% en poids d'au moins un copolymère à base d'éthylène et d'au moins une C₃ à C₂₀-α-oléfine, qui peut être obtenu par polymérisation catalysée par un métallocène,
b) 10 à 65% en poids d'au moins une résine qui rend adhésif,
c) 0 à 35% en poids d'un plastifiant,
d) 0,01 à 30% en poids d'additifs et d'adjuvants choisis parmi les stabilisateurs, les promoteurs d'adhérence, les charges ou les pigments, les cires et/ou d'autres polymères,
la somme valant 100%, **caractérisé en ce que** le copolymère est un copolymère à blocs qui présente, dans la plage de 0°C à 25°C, un comportement élastique dans une large mesure linéaire, mesuré comme le rapport du module d'accumulation E' selon (E'_{0C}- E'_{25C})/E'_{25C} 1,5.

2. Adhésif en masse fondue selon la revendication 1, **caractérisé en ce que** le copolymère présente une température de transition vitreuse (Tg) inférieure à 0°C et un point de fusion supérieur à 30°C.

3. Adhésif en masse fondue selon la revendication 1 ou 2, **caractérisé en ce que** le copolymère est choisi parmi les polymères à base d'éthylène avec des C₄ à C₁₂-α-oléfines ou les polymères à base d'éthylène et de propylène ou les mélanges de ces polymères,

4. Adhésif en masse fondue selon l'une quelconque des revendications 1 à 3, **caractérisé en ce qu'**un polymère ou les deux polymères présentent un rapport du module d'élasticité de (E'_{0C}-E'_{25C})/E'_{25C} < 1.0, en particulier un comportement qui est approximativement constant.

5. Adhésif en masse fondue selon l'une quelconque des revendications 1 à 4, **caractérisé en ce que** le polymère présente une polydispersité (M_{W}/M_{N}) inférieure à 2,5.

6. Adhésif en masse fondue selon l'une quelconque des revendications 1 à 5, **caractérisé en ce que** le copolymère présente deux températures de transition vitreuse (Tg), une Tg étant inférieure à -100°C et une Tg étant située entre -100 et 0°C.

7. Adhésif en masse fondue selon l'une quelconque des revendications 1 à 6, **caractérisé en ce qu'**il contient un mélange de 5 à 30% en poids d'un copolymère d'éthylène/propylène et 5 à 40% en poids d'un copolymère d'éthylène/C₄ à C₉₂-α-oléfines.

8. Adhésif en masse fondue selon l'une quelconque des revendications 1 à 7, **caractérisé en ce qu'**il contient 5 à 30% en poids de plastifiant, choisi parmi les huiles minérales, le polybuténe, les hydrocarbures hydrogénés liquides ou pâteux ou les polyoléfines de bas poids moléculaire.

9. Adhésif en masse fondue selon la revendication 8, **caractérisé en ce qu'**il contient comme adjuvant 0,5 à 20% en poids de copolymères élastiques, choisis parmi les copolymères à blocs de styrène, les copolymères statistiques en C₂/C₃ ou les copolymères d'éthylène-ester acrylique-anhydride de l'acide maléique.

10. Adhésif en masse fondue selon l'une quelconque des revendications 1 à 9, **caractérisé en ce que** l'adhésif en masse fondue présente une viscosité entre 500 et 20 000 mPa.s, en particulier de 500 à 5000 mPa.s.

11. Adhésif en masse fondue selon l'une quelconque des revendications 1 à 10, **caractérisé en ce que** la viscosité de l'adhésif en masse fondue présente, à 140°C, un comportement d'écoulement quasi-newtonien.

12. Utilisation d'un adhésif en masse fondue selon l'une quelconque des revendications 1 à 11 pour le collage de substrats élastiques caoutchouteux, en particulier pour le collage de feuilles présentant un allongement élastique supérieur à 100%.

13. Utilisation d'un adhésif en masse fondue selon l'une quelconque des revendications 1 à 11 comme autoadhésif, en particulier pour le collage d'étiquettes.

14. Utilisation d'un adhésif en masse fondue selon l'une quelconque des revendications 1 à 11 comme adhésif pulvérisable.
